# DEMANDE DE BREVET EUROPEEN

(11) **EP 4 679 478 A1**
(43) Date de publication de la demande: **14.01.2026**
(21) Numéro de dépôt: 25188153.8
(22) Date de dépôt: 08.07.2025
(51) Int. Cl.: H01H 85/046, H01H 85/10

(54) **DISPOSITIF OPTIMISE DE PROTECTION D'UNE LIGNE ELECTRIQUE, SYSTEME ELECTRIQUE ET AERONEF**

(30) Priorité: 10.07.2024 FR 2407537
(71) Demandeur: Airbus Operations (S.A.S.), 31060 Toulouse Cedex 9 (FR)
(72) Inventeur: BAREAUD, Patrick, 31060 Toulouse (FR)
(74) Mandataire: Cabinet Le Guen Maillet

(57) **Abrégé**

L'invention concerne un dispositif de protection (1) optimisé configuré pour opérer une ouverture d'une ligne électrique (10) basse tension en cas de perturbation HVDC, tout en orientant l'apparition éventuelle d'un arc électrique secondaire.

Avantageusement il est ainsi possible d'accroître la sécurité des systèmes en isolant au mieux une ligne électrique en cas de perturbations HVDC au-delà d'une intensité prédéterminée.

## Description

### DOMAINE TECHNIQUE

La présente invention concerne un dispositif de protection d'une ligne électrique basse tension et notamment la protection de signaux d'interface d'équipements aéronautiques embarqués et soumis à des phénomènes induits en provenance de circuits à haute tension. L'invention concerne également un système électrique comprenant un ou plusieurs dispositifs de protection ainsi qu'un aéronef comprenant un tel système électrique.

### ÉTAT DE LA TECHNIQUE ANTÉRIEURE

L'industrie aéronautique opère de profonds changements en termes de conception des aéronefs, dans un but de réduction importante des émissions de dioxyde de carbone et des oxydes d'azote, en raison des contraintes en matière d'écologie et de développement durable.

L'utilisation accrue d'énergie électrique dans les systèmes d'aéronefs, et notamment les systèmes de propulsion, implique l'utilisation de nombreux équipements interconnectés pouvant utiliser des réseaux électriques à haute tension (dont des réseaux HVDC, sigle anglais de *« High-Voltage Direct Current »* et qui signifie « courant continu haute tension ». Ces équipements à haute tension, dits « équipements HVDC » sont également interconnectés aux multiples systèmes déjà utilisés dans les aéronefs, tels que des calculateurs et des systèmes de supervision, par exemple. Des circuits d'interfaces nommés interfaces basse tension sont utilisés pour interconnecter un équipement haute tension à un équipement basse tension ou encore à des sources d'énergie basse tension. Ces nouvelles architectures introduisent un risque nouveau, à savoir la propagation d'ondes ou plus largement de perturbations HVDC dans des circuits basse tension. Des protections sont utilisables, telles que des fusibles, des fusibles programmés, des barrières d'isolation ou encore des limiteurs de tension, mais l'absence de solution intégrée entraîne une augmentation du volume et de la masse des circuits utilisés, ce qui va à l'encontre d'une diminution de la masse normalement recherchée en aéronautique. Des systèmes de protection utilisent aussi des points de faiblesse prédéterminés et calibrés dans des circuits imprimés d'équipements pour permettre une ouverture de lignes électriques en cas de défaut et limiter ou empêcher la propagation d'ondes ou de perturbations haute tension si un défaut survient. Il arrive cependant que de tels systèmes ne soient pas complètement efficaces du fait de l'apparition d'arcs électriques secondaires. Il existe donc un besoin de limiter les effets d'arcs secondaires en limitant le plus possible les caractéristiques de masse et de volume des systèmes.

La situation peut être améliorée.

### EXPOSÉ DE L'INVENTION

Un objet de la présente invention est de limiter la propagation d'ondes ou de perturbations haute tension dans des circuits électriques en isolant les circuits touchés et en contrôlant et en orientant les possibles arcs électriques secondaires.

A cet effet, il est proposé un dispositif d'ouverture d'une ligne électrique d'un circuit électrique, le dispositif d'ouverture comprenant une partie centrale de la ligne électrique, présentant une première section d'une dimension prédéterminée, et deux parties distales de la ligne électrique présentant chacune une deuxième section de dimension supérieure à la dimension de ladite première section, et respectivement reliées à ladite partie centrale, le dispositif d'ouverture étant tel que :
- chacune des parties distales est reliée à la partie centrale via une partie intermédiaire de ligne électrique présentant une troisième section dont la dimension est comprise entre la dimension de la première section et la dimension de l'une des deuxièmes sections dont elle est voisine,
- les portions de la ligne électrique, internes audit dispositif d'ouverture, et où existent des variations de dimension de la section de la ligne électrique, entre ladite partie centrale et lesdites parties intermédiaires d'une part, et entre chacune desdites parties intermédiaires et ladite partie distale voisine, d'autre part, présentent des angles droits ou sensiblement droits, et,
- une surface terminale d'une deuxième ligne électrique est agencée en regard de l'une desdites parties intermédiaires et présente des angles droits ou sensiblement droits, de sorte à créer une zone d'amorce d'arc électrique lors d'une rupture par fusion de ladite partie centrale.

Ainsi, en cas de perturbations de type ondes HVDC sur une ligne électrique, il est possible d'orienter un arc secondaire prenant naissance après l'ouverture de cette ligne électrique par fusion de la partie centrale d'un tel dispositif d'ouverture de ligne électrique implémenté sur cette ligne électrique, grâce à une zone d'amorce créée par l'agencement précité.

Selon un mode de réalisation, le dispositif est réalisé sous la forme d'un circuit imprimé.

L'invention a également pour objet un système ou un circuit électrique comprenant au moins un dispositif d'ouverture d'une ligne électrique tel que précédemment décrit et au moins un dispositif limiteur de tension.

Un autre objet de l'invention est un aéronef comprenant au moins un dispositif d'ouverture d'une ligne électrique tel que précédemment décrit ou un circuit électrique tel que précité.

### BRÈVE DESCRIPTION DES DESSINS

[Fig. 1] illustre un dispositif de protection par ouverture d'une ligne électrique, implémenté sur une ligne électrique, selon un mode de réalisation ;
[Fig. 2] est une représentation symbolique du dispositif de protection déjà représenté sur la Fig. 1 ;
[Fig. 3] illustre des dimensions et des zones particulières du dispositif de protection déjà représenté sur la Fig. 1 ;
[Fig. 4] illustre symboliquement un circuit d'interface d'un équipement comprenant un dispositif de protection tel que déjà représenté sur la Fig. 1, combiné à un dispositif limiteur de tension ;
[Fig. 5] illustre symboliquement un circuit d'interface d'un équipement comprenant deux dispositifs de protection tel que déjà représenté sur la Fig. 1, combiné à un dispositif limiteur de tension ; et,
[Fig. 6] est une vue latérale d'un aéronef comprenant au moins un dispositif de protection avantageusement configuré pour opérer une ouverture d'une ligne électrique en cas de perturbations HVDC, selon un mode de réalisation.

### EXPOSÉ DÉTAILLÉ DE MODES DE RÉALISATION

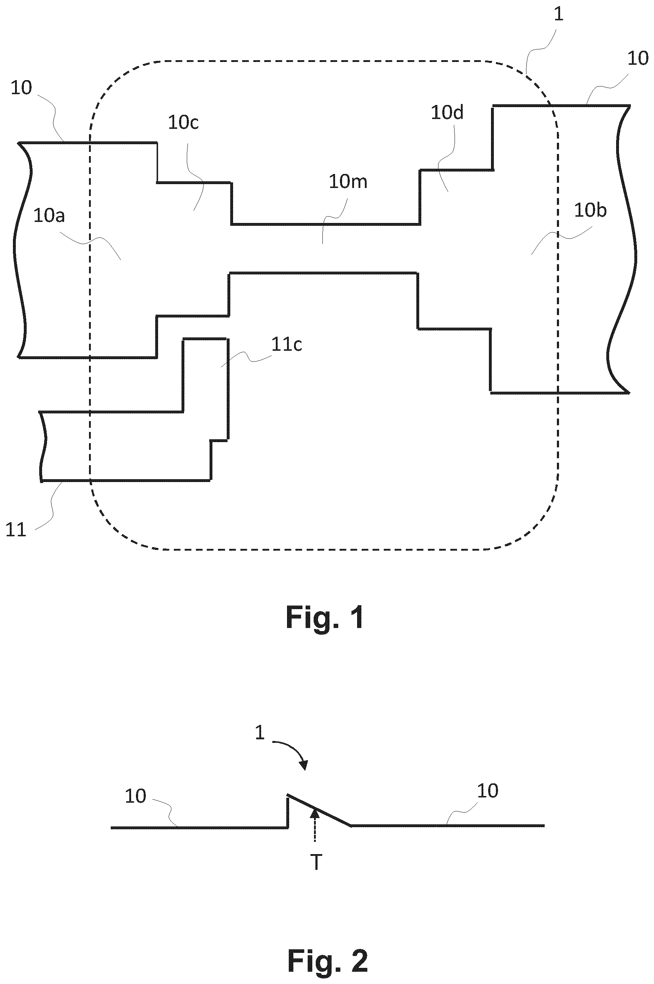

La Fig. 1 représente schématiquement un dispositif de protection par ouverture 1 d'une ligne électrique encore appelé ici dispositif d'ouverture 1 d'une ligne électrique. Selon l'exemple décrit, le dispositif d'ouverture 1 est configuré pour pouvoir opérer une ouverture de la ligne électrique 10 si celle-ci est l'objet d'une perturbation HVDC de nature à nuire à son intégrité. Pour ce faire, le dispositif d'ouverture 1 est implémenté sur la ligne électrique 10. En d'autres termes, le dispositif d'ouverture 1 est intégré à la ligne électrique 10 qu'il protège. Bien évidemment, des éléments du dispositif d'ouverture 1 sont calibrés pour que le dispositif d'ouverture 1 opère une ouverture de la ligne électrique 10 dans des conditions prédéterminées.

La calibration du dispositif d'ouverture 1 selon l'exemple décrit dépend de l'intensité de la perturbation à traiter et est réalisée par l'homme du métier à partir d'informations obtenues via des simulations ou des tests et/ou études en laboratoire.

A cet effet, le dispositif d'ouverture 1 comprend une partie centrale 10m et des parties distales 10a et 10b servant respectivement d'interfaces de connexion aux parties de la ligne électrique 10 n'étant pas comprises dans le dispositif d'ouverture 1. Ainsi, le terme « distale » signifie ici que les parties 10a et 10b sont les parties les plus éloignées de la partie centrale 10m. Ces parties sont utiles à la connexion du dispositif d'ouverture 1 avec les éléments de la ligne électrique 10 qui lui sont externes. Avantageusement, la partie centrale 10m présente une section de dimension substantiellement inférieure aux sections des parties distales 10a et 10b, de sorte que, en présence d'une perturbation HVDC, la partie centrale 10m se comporte conditionnellement comme un fusible lorsque l'énergie qui la traverse excède une valeur seuil prédéterminée. Ainsi, si l'énergie alors dissipée dans la partie centrale 10m est supérieure à la valeur seuil prédéterminée, la température locale de la partie centrale 10m est suffisamment importante pour entraîner une détérioration programmée (c'est-à-dire une rupture par fusion) de la partie centrale 10m, ce qui permet de limiter la propagation d'une perturbation HVDC d'une amplitude minimale prédéterminée. Astucieusement et avantageusement, des zones intermédiaires de liaison 10c et 10d, agencées entre la partie centrale 10m et les parties distales 10a et 10b, présentent chacune une section de dimension intermédiaire entre la dimension de la partie centrale 10m et la section de la partie distale qui lui est directement reliée (qui lui est immédiatement voisine). Ces zones intermédiaires de liaison sont encore appelées ici parties intermédiaires. Astucieusement encore, les parties intermédiaires 10c et 10d présentent chacune des angles vifs, préférentiellement des angles droits ou sensiblement droits, de sorte à créer des effets de coin (densité de courant accrue) en présence d'une perturbation HVDC. Les termes « sensiblement droits » décrivent ici des angles compris entre 70 et 110 degrés, préférentiellement entre 80 et 100 degrés. Enfin, une deuxième ligne électrique 11, reliée à une équipotentielle de référence, par exemple une masse, est implémentée à proximité de l'une des parties distales du dispositif d'ouverture 1 et s'étend jusqu'à une distance prédéterminée d'un bord d'une partie intermédiaire en présentant une partie terminale 11c agencée avec des angles vifs. Un tel agencement permet avantageusement de créer une zone d'amorce d'arc secondaire dans le cas où un tel arc secondaire devrait se former après l'apparition et éventuellement l'extinction d'un arc primaire entre les parties intermédiaires résiduelles, après une fusion de la partie centrale 10m faisant suite à une perturbation HVDC au-delà du seuil calibré par les différentes dimensions des éléments qui composent le dispositif d'ouverture 1. Il en résulte que si un arc secondaire devait prendre naissance en cas de perturbation HVDC, celui-ci serait canalisé par la zone d'amorce ainsi créée.

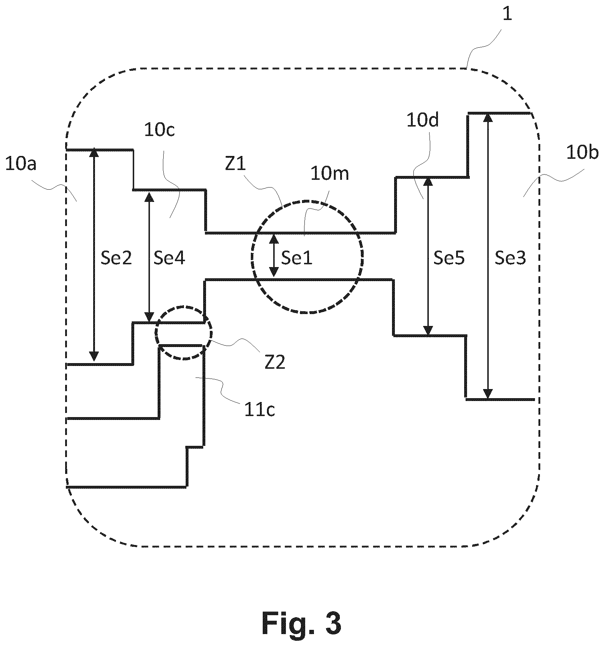

Avantageusement, les sections Se2 et Se3 (référencées sur la Fig. 3) des parties distales du dispositif d'ouverture 1 sont dimensionnées pour permettre de supporter les courants maximaux susceptibles d'apparaitre à la fois en conditions normales d'opération de la ligne électrique 10 et en conditions anormales (c'est-à-dire en présence d'une perturbation HVDC). En outre, la section Se6 (référencée sur la Fig. 3) de la deuxième ligne électrique 11, et de sa partie terminale 11c, doit être supérieure à la section Se1 de la partie centrale 10m du dispositif d'ouverture 1.

Bien évidemment, les caractéristiques de dimensionnement des sections décrites, et plus largement les caractéristiques de dimensionnement de tous les éléments du dispositif d'ouverture 1 ne peuvent être définies intrinsèquement et sont prédéterminées en fonction du niveau de perturbation cible pour lequel une ouverture du dispositif d'ouverture 1 doit avoir lieu, donc en fonction de l'endroit dans un circuit électrique où le dispositif d'ouverture 1 est utilisé (ou un dispositif d'architecture similaire), et de la nature des équipements à protéger.

L'homme du métier de la protection contre les perturbations électriques haute tension saura calibrer les différentes sections du dispositif d'ouverture 1 décrites, en respectant les conditions de dimensionnements relatifs énoncées, à partir d'abaques, de tests préalables, de simulations avec des outils spécialisés et dédiés, ou d'études réalisées lors de travaux de recherche et développement.

La Fig. 2 est une représentation symbolique du dispositif d'ouverture 1 opérant comme un interrupteur normalement fermé (dont l'ouverture est toutefois irréversible) sur la ligne électrique 10 préalablement à une perturbation HVDC de nature à occasionner son ouverture.

La Fig. 3 reprend des éléments de la Fig. 1 auxquels sont ajoutées des références de dimensionnement des différents éléments qui composent conjointement le dispositif d'ouverture 1. Il est possible d'observer que la partie centrale 10m présente une section Se1 inférieure aux sections respectives Se2 et Se3 des parties distales 10a et 10b. En outre, les parties intermédiaires 10c et 10d présentent chacune une section intermédiaire entre la section Se1 de la partie centrale 10m et la section de la partie distale dont elles sont respectivement directement voisines. Ainsi, la partie intermédiaire 10c présente une section Se4 supérieure à la section Se1 de la partie centrale 10m et inférieure à la section Se2 de la partie distale 1a. De façon similaire, la partie intermédiaire 10d présente une section Se5 supérieure à la section Se1 de la partie centrale 10m et inférieure à la section Se3 de la partie distale 10b. L'agencement décrit permet l'implémentation d'une structure (ou architecture) présentant des angles vifs entre les différentes parties susmentionnées, voisines entre elles, de nature à générer des effets de coin, à savoir des phénomènes physiques de densité de courant et d'énergie accrue dans les coins présentant les angles vifs. Astucieusement, la création de ces densités de courant permet de définir des zones d'amorçage d'arcs électriques que sont respectivement la zone Z1 (entourée en pointillés) pour l'arc principal résultant d'une fusion de la partie centrale 10m et la zone Z2 (elle aussi entourée en pointillés) astucieusement obtenue grâce à l'implémentation susmentionnée des variations de sections et à celle des angles vifs, préférentiellement sous la forme d'angles droits.

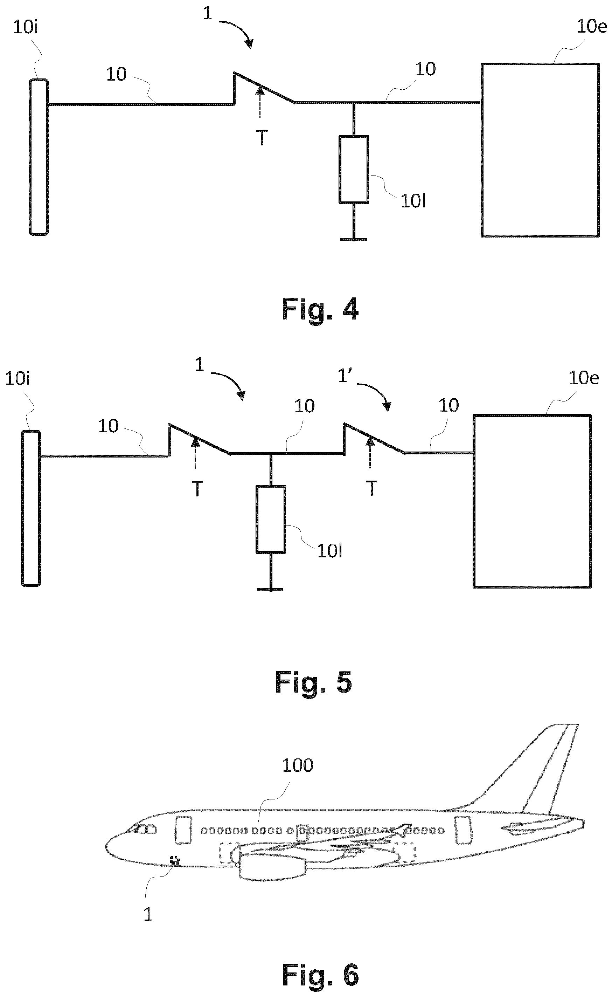

La **Fig. 4** illustre symboliquement le dispositif d'ouverture 1 utilisé en combinaison avec un dispositif limiteur de tension 101 pour protéger la ligne électrique 10 connectée d'une part à un équipement électrique ou électronique 10e et d'autre part à une interface de connexion 10i. Cet agencement permet de protéger l'équipement 10e de perturbations HVDC transitant via l'interface de connexion 10i, lorsque l'équipement 10e ne comprend pas lui-même de circuit HVDC (cas d'une perturbation HVDC de source externe à l'équipement 10e). Le limiteur de tension 101 permet de limiter transitoirement la tension sur la ligne électrique 10 à protéger, ce qui permet de garantir que la tension résiduelle présente en cas de perturbation HVDC reste dans des limites acceptables pour les composants électriques et/ou électroniques connectés à la ligne électrique 10 en aval du dispositif d'ouverture 1 par rapport à l'endroit duquel provient une possible perturbation HVDC. En outre, le dispositif limiteur de tension 101 est configuré pour absorber une grande quantité de courant, ce qui permet de dissiper localement par effet Joule une énergie suffisante pour ouvrir le dispositif d'ouverture 1 par fusion de sa partie centrale 10m. Selon un mode de réalisation, le limiteur de tension 101 est un éclateur à gaz. Selon une variante, le limiteur de tension 101 est une diode de suppression de transitoire. Ces exemples ne sont pas limitatifs et le dispositif limiteur de tension 101 peut être choisi parmi tous les dispositifs susceptibles de limiter les effets délétères pour les composants agencés et connectés en aval sur la ligne électrique et pour permettre d'absorber une quantité de courant de nature à entraîner une fusion de la partie centrale du dispositif d'ouverture 1.

Dans un mode particulier de réalisation, lorsque l'équipement 10e comprend lui-même au moins un circuit HVDC et qu'il existe alors un risque de perturbation d'origine interne à l'équipement 10e à protéger, il est possible d'utiliser un circuit de protection tel qu'illustré symboliquement sur la **Fig. 5****,** selon lequel le dispositif d'ouverture 1 est utilisé en combinaison avec un dispositif d'ouverture 1' qui présente une structure identique à celle du dispositif d'ouverture 1. Cela permet de limiter le risque de propagation d'une perturbation HVDC en provenance de l'équipement 10e vers l'interface de connexion 10i (cas d'une perturbation HVDC de source interne à l'équipement 10e), selon le même principe qu'énoncé précédemment en relation avec la Fig. 4. Le dispositif limiteur de tension 101 est alors relié à la ligne électrique 10 entre le dispositif d'ouverture 1 et le dispositif d'ouverture 1'.

La **Fig. 6** illustre un aéronef 100 comprenant un ou plusieurs dispositifs d'ouverture similaires au dispositif d'ouverture 1, ce qui permet avantageusement de limiter la propagation de perturbations HVDC, le cas échéant, au sein d'équipements et de maîtriser les séquences d'évènements consécutifs à une telle perturbation HVDC.

## Revendications

1. Dispositif d'ouverture (1) d'une ligne électrique (10) d'un circuit électrique, ledit dispositif d'ouverture (1) comprenant une partie centrale (10m) de ladite ligne électrique (10), présentant une première section (Se1) prédéterminée, et deux parties distales (10a, 10b) de ladite ligne électrique (10) présentant chacune une deuxième section (Se2, Se3) supérieure à ladite première section (Se1) et respectivement reliées à ladite partie centrale, le dispositif d'ouverture étant **caractérisé en ce que** :
- chacune desdites parties distales est reliée à ladite partie centrale via une partie intermédiaire (10c, 10d) de ligne électrique présentant une troisième section (Se4, Se5) comprise entre la première section (Se1) et l'une des deuxièmes sections (Se2, Se3) dont elle est voisine,
- les portions de ladite ligne électrique, internes audit dispositif d'ouverture, et où existent des variations de section de la ligne électrique, entre ladite partie centrale et lesdites parties intermédiaires d'une part, et entre chacune desdites parties intermédiaires et ladite partie distale voisine, d'autre part, présentent des angles droits ou sensiblement droits,
- une surface terminale (11c) d'une deuxième ligne électrique (11) est agencée en regard de l'une desdites parties intermédiaires et présente des angles droits ou sensiblement droits, de sorte à créer une zone d'amorce d'arc électrique lors d'une rupture par fusion de ladite partie centrale.

2. Dispositif d'ouverture d'une ligne électrique selon la revendication 1, le dispositif étant réalisé sous la forme d'un circuit imprimé.

3. Circuit électrique comprenant au moins un dispositif d'ouverture (1) d'une ligne électrique selon l'une des revendications 1 et 2 et un dispositif limiteur de tension (101).

4. Aéronef comprenant au moins un dispositif d'ouverture (1) d'une ligne électrique selon l'une des revendication 1 et 2 ou un circuit électrique selon la revendication 3.
